(19) Europäisches Patentamt

European Patent Office

Office européen des brevets

(11) **EP 1 133 718 B1**

(12) **EUROPÄISCHE PATENTSCHRIFT**

(45) Veröffentlichungstag und Bekanntmachung des Hinweises auf die Patenterteilung:
**14.05.2003  Patentblatt 2003/20**

(21) Anmeldenummer: **99959399.9**

(22) Anmeldetag: **22.11.1999**

(51) Int Cl.$^7$: **G05D 7/06**

(86) Internationale Anmeldenummer:
**PCT/EP99/09748**

(87) Internationale Veröffentlichungsnummer:
**WO 00/031602 (02.06.2000 Gazette 2000/22)**

(54) **VERFAHREN UND VORRICHTUNG ZUR REGELUNG EINZELNER TEILSTRÖME EINES FÖRDERSYSTEMS FÜR FLUIDE MEDIEN**

METHOD AND DEVICE FOR REGULATING INDIVIDUAL SUB-FLOWS OF A SYSTEM FOR CONVEYING FLUID MEDIA

PROCEDE ET DISPOSITIF DE REGLAGE DE DIFFERENTS FLUX PARTIELS D'UN SYSTEME DE TRANSPORT DESTINE A DES AGENTS FLUIDIQUES

(84) Benannte Vertragsstaaten:
**DE FR GB**

(30) Priorität: **20.11.1998  DE 19855002**

(43) Veröffentlichungstag der Anmeldung:
**19.09.2001   Patentblatt 2001/38**

(73) Patentinhaber: **SEPIAtec GmbH**
**12487 Berlin (DE)**

(72) Erfinder:
- **MÜLLER-KUHRT, Lutz**
  **D-14089 Berlin (DE)**
- **GOD, Ralf**
  **D-14167 Berlin (DE)**
- **GUMM, Holger**
  **D-14548 Ferch (DE)**
- **BINKELE, Jörg**
  **D-14469 Potsdam (DE)**

(74) Vertreter: **Gulde, Klaus W., Dipl.-Chem. et al**
**Patentanwälte**
**Gulde Hengelhaupt Ziebig**
**Schützenstrasse 15-17**
**10117 Berlin (DE)**

(56) Entgegenhaltungen:
**WO-A-98/37790          GB-A- 2 275 115**
**US-A- 2 676 603**

**Beschreibung**

Die Erfindung bezieht sich auf ein Verfahren und eine Vorrichtung zur Regelung einzelner Teilströme eines Fördersystems für fluide Medien gemäß den Oberbegriffen der Ansprüche 1 und 7.

In Fördersystemen für fluide Medien mit mehreren parallelen Förderlinien ist eine Druckerzeugung für den Transport des Mediums verantwortlich. Oftmals ist es erforderlich, daß die am jeweiligen Förderziel ankommenden einzelnen Teilströme von gleicher oder bekannter Größe sind. In einem solchen Fall müssen die ableitenden Strömungswiderstände einstellbar sein.

Die Möglichkeit der zeitlichen Koordinierung der am Förderziel ankommenden Volumina (oder Massen) ist insbesondere dann wichtig, wenn eine gezielte inhomogene Zusammensetzung des fluiden Mediums vorliegt oder das fluide Medium Träger für diskontinuierlich zu transportierende Substanzen ist. Auch wenn bei der Förderung der fluiden Medien exakte quantitative Dosierungen oder auch analytische Bestimmungen einer sich möglicherweise ändernden Zusammensetzung in den einzelnen Förderlinien eines Fördersystems erforderlich sind, können unvorhersehbare Durchsatzzeiten Probleme schaffen.

Beispielsweise im Bereich der Lebensmittelindustrie, der Medizintechnik und auch der pharmazeutischen Industrie ist es oft notwendig, bestimmte Mengenvolumina gleichzeitig jeweils einem bestimmten Förderziel dosierend zuzuführen.

Dieser Notwendigkeit stehen in der Praxis unterschiedliche und teilweise sich zeitlich verändernde Strömungswiderstände in den einzelnen Förderlinien entgegen. Diese unterschiedlichen Strömungswiderstände entstehen durch unterschiedliche Reibungsverluste im Leitungssystem. Ursache hierfür sind beispielsweise Materialfehler, Strömungsquerschnitts-Unterschiede oder auch Verstopfungen.

Bekannt ist bisher lediglich die Regelung des Druckes in den einzelnen Förderlinien. Ein Beispiel hierfür zeigt die US-A-2 676603. Die dort gezeigte Vorrichtung arbeitet mit mehreren Restriktionskapillaren, die ausgangsseitig jeweils auf ein gleiches Druckniveau gebracht werden. Die abgegebenen Volumenströme sind nur bei gleichen Drücken in den dort beschriebenen Entladekammern, gleichem Vordruck, gleicher Temperatur und gleichen Restriktionskapillaren gleich. Die Regelung funktioniert nämlich nur dann, wenn die jeweiligen Gegendrücke der zu versorgenden Einheiten (im dort gezeigten Fall eines Verbrennungsmotors der Druckabfall an den Kraftstoffleitungen plus dem Druck im Ansaugrohr beim Öffnen des Einlassventils) klein gegenüber dem Regulator-Nachdruck sind. Überschreiten diese Gegendrücke einen bestimmten Grenzwert, so wird die Regelung außer Kraft gesetzt und die Volumenströme stellen sich entsprechend dem jeweiligen Gegendruck ein. Außerdem bemerkt die Reglung nicht, wenn eine der Restriktionskapillaren einen erhöhten Strömungswiderstand, z. B. aufgrund einer Verstopfung, zeigt. In der verstopften Restriktionskapillare stellt sich dann bei gleichem Druckgefälle ein entsprechend kleinerer Volumenstrom ein.

Der Erfindung liegt die Aufgabe zugrunde, ein Verfahren und eine Vorrichtung anzugeben, mit denen es möglich ist, in den einzelnen Förderlinien eines Fördersystems für fluide Medien mit nur einer einzigen konstant fördernden Fördereinheit die Teilströme der Förderlinien nach Bedarf zu regeln.

Die Lösung der Aufgabe erfolgt mit den kennzeichnenden Merkmalen der Ansprüche 1 und 7.

Vorteilhafte Weiterbildungen sind in den Unteransprüchen angegeben.

Ein wesentliches Merkmal des hier beschriebenen Verfahrens ist die Bestimmung von Teilströmungswiderständen aus Quotienten eines vor der Verteilung gemessenen Gesamtdrucks P und eines in jeder Förderlinie ermittelten Teilstromwertes $S_n$.

$Q_n = \dfrac{P}{S_n}$ Berechnung der Quotienten für die parallele Regelung

Die Anzahl der Förderlinien n bestimmt hierbei die Anzahl der zu bildenden Quotienten sowie die Anzahl der erforderlichen Regelkreise.

Für den Gesamtdruck P und den Teilstromwert $S_n$ können bei obiger Quotientenbildung auch zu den Einheitsgrößen proportionale Messwerte eingesetzt werden.

Die für die einzelnen Förderlinien berechneten Quotienten stellen für die jeweilige Förderlinie einen spezifischen Strömungswiderstand dar und sind als Regel-Istwerte zu betrachten. Die Möglichkeit der Einregelung dieser parallelen Strömungswiderstände durch Ventilverstellung in den einzelnen Förderlinien erlaubt einen Betrieb mit gleichen oder auch unterschiedlichen Teilströmen. Die Regelung der Teilströme wird somit auf eine Regelung paralleler Strömungswiderstände zurückgeführt, was eine Kopplung der Regelkreise über den Gesamtdruck des Fördersystems stark unterdrückt und eine vollständige Verteilung des geförderten Mediums auf die Anzahl der Förderlinien gewährleistet. Letzteres wäre ohne Einbeziehung des Gesamtdruckes und direkter Regelung auf den Teilstrom bei konstantem Gesamtstrom nicht zu erreichen.

Für die Auswahl des Gesamtdrucksensors, der den Druck P vor der Verteilung auf die einzelnen Förderlinien erfaßt, ist der zulässige Bereich des Gesamtstromes, sowie die möglichen Änderungen in der Viskosität des Fördermediums entscheidend.

Die Auswahl eines günstigen Messprinzips zur Bestimmung des Teilstromwertes $S_n$ ist abhängig von der jeweiligen Anwendung. <

Zur Messung von Volumen- u. Massenströmen sind die unterschiedlichsten Verfahren bekannt. Kriterien für die Auswahl von Durchflussmeßgeräten sind in der DIN 2644 festgelegt.

Die Vorteile der Erfindung liegen in der Möglichkeit, mit dem Verfahren und der Vorrichtung bei einem Einsatz einer einzigen Fördereinheit (z.B. Pumpe) in einem Fördersystem gleiche oder gezielt unterschiedliche Teilströme für fluide Medien in den Förderlinien zu erzeugen.

Jede der strangweise arbeitenden Regeleinrichtungen kann hierbei ungestört von den Regelvorgängen in den anderen Förderlinien die Annäherung des Istwertes an den vorgegebenen Sollwert vornehmen. Im Gegensatz dazu wäre bei direkter Einregulierung der Teilströme unter Verwendung eines Durchflussmessers und eines Stellventils eine Störung durch die Regelvorgänge in den anderen Förderlinien unvermeidbar. Insgesamt wäre wegen der Konstantstromeinspeisung das Regeln des Teilstroms nicht möglich.

Beim beschriebenen Verfahren sind Förderleistung und Förderdruck variierbar, -ohne daß das eingeregelte Gleichgewicht gestört wird. Bei Anwendungen mit einer sich ändernden Viskosität kann durch geeignete Auswahl und geeignetem Einbau der Teilstrommesseinheit eine von der Viskosität unabhängige Sollwerteinstellung erreicht werden.

Ein weiterer, wichtiger Vorteil der Erfindung besteht in der Ermittlung von während des Betriebes plötzlich oder langsam auftretenden Änderungen im Strömungswiderstand einzelner Förderlinien (beispielsweise durch Verstopfungen beim Transport von Dispersionen oder bei Undichtigkeiten in einer Förderlinie). Legt man für die verwendeten Ventile einen erlaubten Stellwertbereich fest, so können o. g. Störungen rechtzeitig bemerkt und die betreffenden Förderlinien herausgeschaltet werden.

Anhand von Zeichnungen und Ausführungsbeispielen wird die Erfindung im Folgenden näher erläutert.

Es zeigen

Fig. 1a     eine erste schematische Darstellung der Anordnung der Regelungsvorrichtung in einer Förderlinie, wobei die Teilstrommesseinheit und die Drosselstelle B des Ventils (7) vor dem Strömungswiderstand angeordnet sind.

Fig. 1b     eine zweite schematische Darstellung der Anordnung der Regelungsvorrichtung in einer Förderlinie, wobei die Teilstrommesseinheit und die Drosselstelle B des Ventils (7) hinter dem Strömungswiderstand angeordnet sind.

Fig. 1c     eine dritte schematische Darstellung der Anordnung der Regelungsvorrichtung in einer Förderlinie, wobei die Teilstrommesseinheit vor und die Drosselstelle B des Ventils (7) hinter dem Strömungswiderstand angeordnet ist.

Fig. 1d     eine vierte schematische Darstellung der Anordnung der Regelungsvorrichtung in einer Förderlinie, wobei die Teilstrommesseinheit hinter und die Drosselstelle B des Ventils (7) vor dem Strömungswiderstand angeordnet ist,

Fig. 2a     eine erste schematische Anordnungsvariante der Regelungsvorrichtung mit Teilstrommessung durch Differenzdruck in einem Fördersystem,

Fig. 2b     eine zweite schematische Anordnungsvariante der Regelungsvorrichtung mit Teilstrommessung durch Differenzdruck in einem Fördersystem,

Fig. 2c     eine dritte schematische Anordnungsvariante der Regelungsvorrichtung mit Teilstrommessung durch Differenzdruck in einem Fördersystem,

Fig. 2d     eine vierte schematische Anordnungsvariante der Regelungsvorrichtung mit Teilstrommessung durch Differenzdruck in einem Fördersystem,

Fig. 2e     eine fünfte schematische Anordnungsvariante der Regelungsvorrichtung mit Teilstrommessung durch Differenzdruck in einem Fördersystem,

Fig. 2f     eine sechste schematische Anordnungsvariante der Regelungsvorrichtung mit Teilstrommessung durch Differenzdruck in einem Fördersystem,

Fig. 3     eine graphische Darstellung einer mit Anordnungsvariante von Fig. 2a realisierten indirekten Volumenstromregelung in einer vierkanaligen flüssigkeitschromatographischen Anlage.

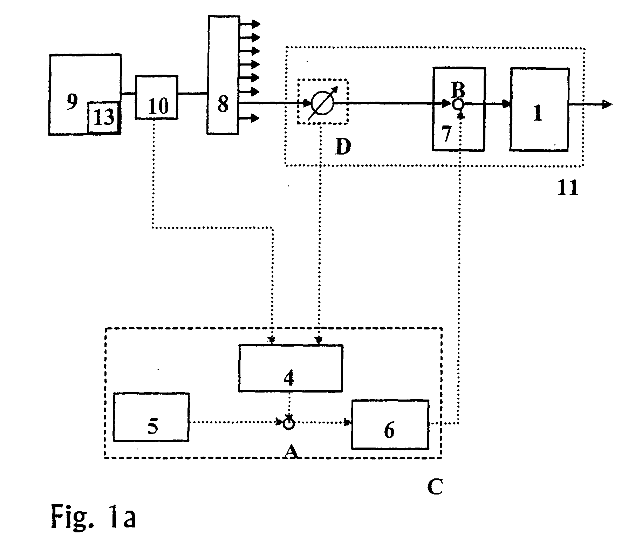

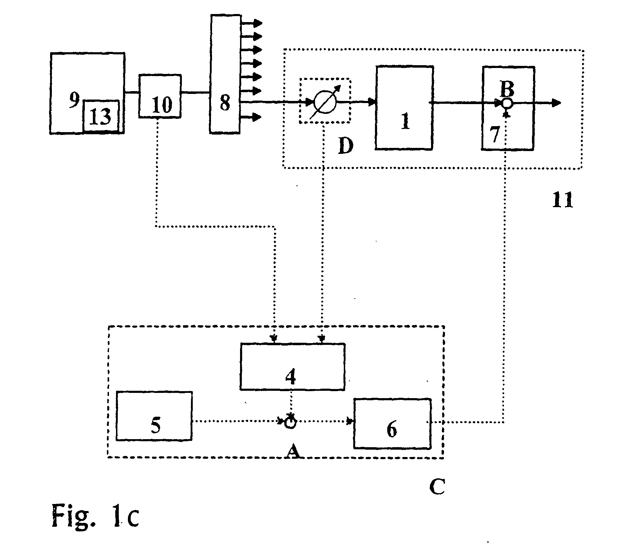

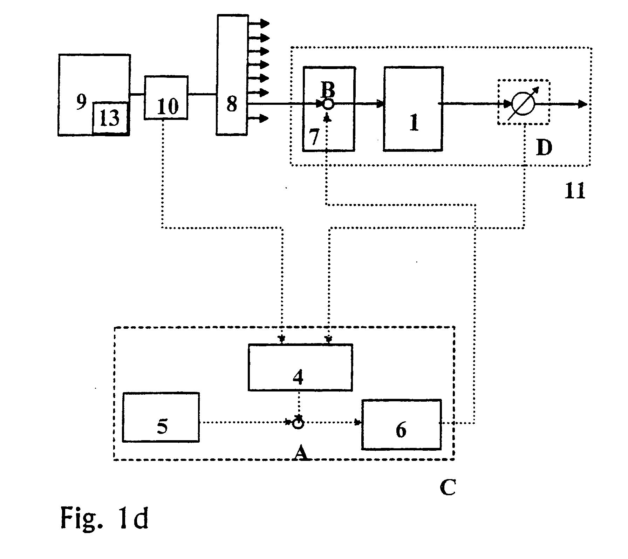

In Fig. 1a bis 1d ist schematisch eine erfindungsgemäße Regelungsvorrichtung beschrieben, die in einer Förderlinie 11 eines mehrkanaligen Fördersystems angeordnet ist, funktionsablaufmäßig dargestellt. Aus Gründen der Übersichtlichkeit ist hier zur Erklärung der Vorrichtung nur eine Förderlinie 11 dargestellt.

Der von einer Fördereinheit 9 (mit Konstantflußregelung 13 des Fördersystemes erzeugte Gesamtdruck treibt für die betreffende Förderlinie 11 einen Teilstrom einer fluiden Phase (Medium). Dieser fließt in Fig. 1a nach der Verteilung 8 durch die Teilstrommesseinheit D und danach über die Drosselstelle B des Ventiles 7 durch den Strömungswiderstand 1. Ein Gesamtdruckmesser 10, der ausgangsseitig der Fördereinheit 9 angeordnet ist, ermittelt den am Gesamtsystem abfallenden Druck P. Der Quotient aus diesem Druck und eines in jeder Förderlinie 11 ermittelten Teilstromwertes $S_n$ stellt für die betrachtete Förderlinie 11 einen Istwert für den Strömungswiderstand 1 dar. In der Istwertermittlung 4 des Datenerfassungs-, Verarbeitungs- und Stellwertausgabemoduls C wird dieser Quotient als Istwert berechnet und an die Vergleichsstelle A (Istwert-Sollwert) des Datenerfassungs-, Verarbeitungs- und Stellwert-Ausgangsmodul C geführt. Aus dem sog. Istwert und einem von einem Sollwertabgabeteil 5 vorgegebenen Sollwert wird eine Regeldifferenz berechnet, die über den Regler 6 und das Ventil 7 den Einregelungsprozess steuert.

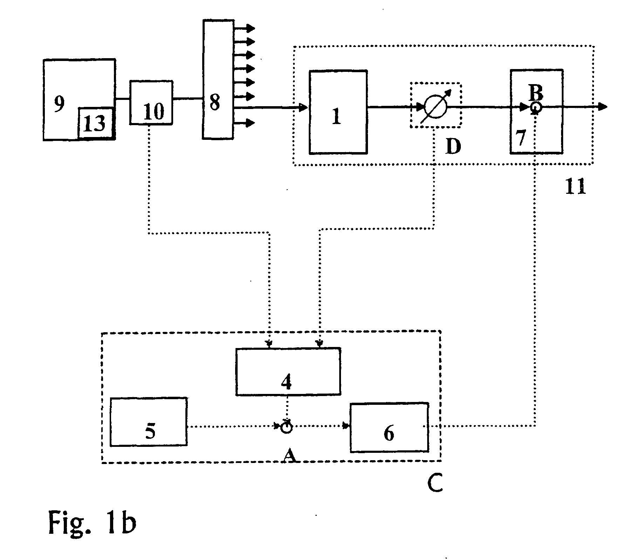

Fig. 1b bis Fig. 1d zeigen weitere, mögliche Anordnungsvarianten zu dieser Ausführung der Erfindung.

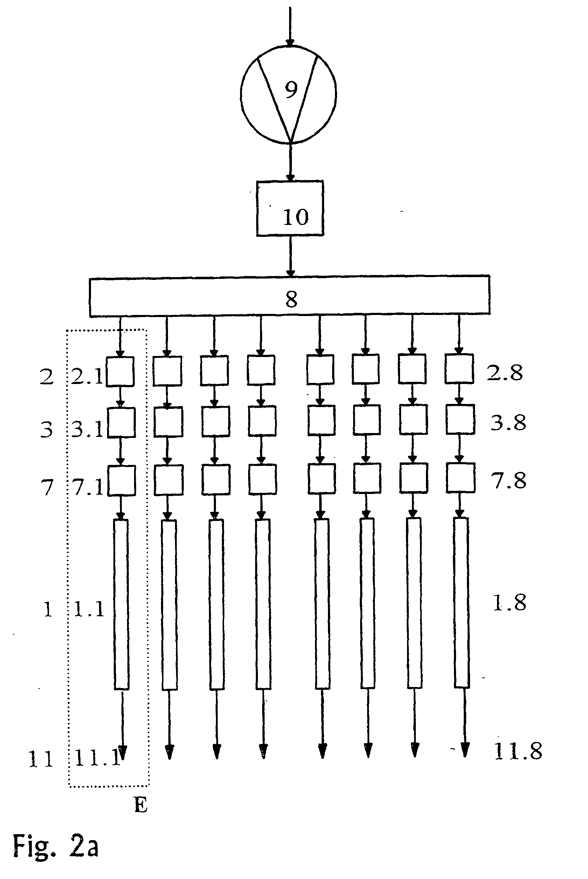

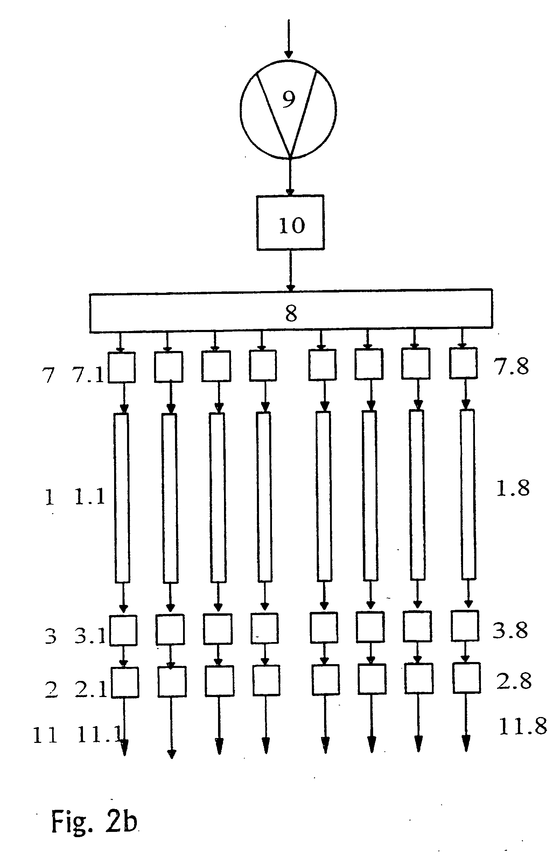

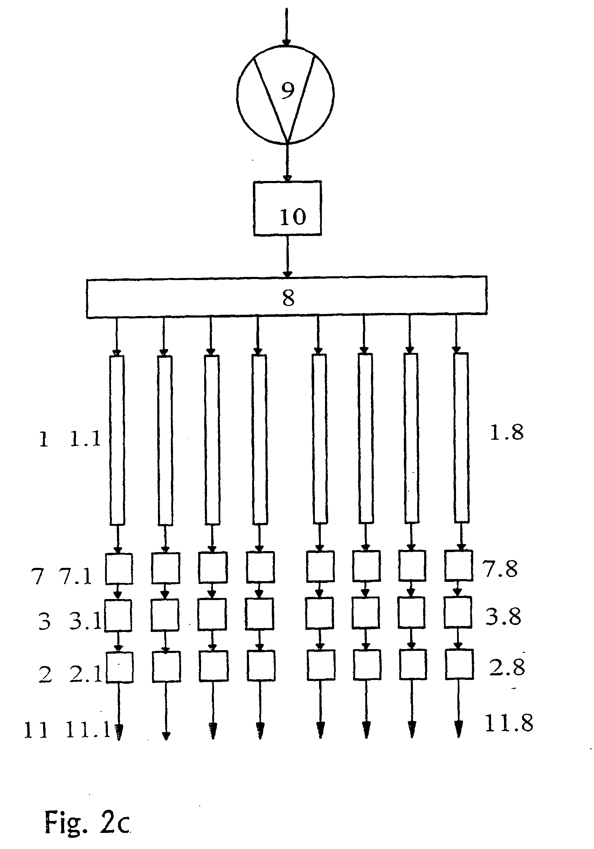

Gemäß einer weiteren Ausführung der Erfindung wird nach Fig. 2a bis Fig. 2f der Teilstrom mittels einem zum Teilstrom direkt proportionalem Druckabfall an einer Meßkapillare 2, die seriell zum Strömungswiderstand 1 angeordnet ist, bestimmt. Dieser Druckabfall wird über die Differenz zweier Drücke ermittelt. In einer bevorzugten Anordnungsvariante dieser speziellen Ausführung der Erfindung, dargestellt in Fig. 2a, wird dieser Druckabfall durch die Differenz der Drücke am Gesamtdruckmesser 10 und am Teildruckmesser 3 dargestellt ($\Delta p_{Messkapillare} = P - P_{Messkapillare}$). Der o. g. Quotient errechnet sich somit aus dem Gesamtdruck P und der Druckdifferenz an der Messkapillare.

Fig. 2b bis Fig. 2f zeigen weitere, mögliche Anordnungsvarianten zu dieser speziellen Ausführung der Erfindung.

Die erwähnten speziellen Ausführungen (Fig.2a - Fig.2f) mit Teilstrommessung durch Differenzdruckmessung werden aufgrund ihrer besonderen Bedeutung für das beschriebene Regelverfahren nachstehend für eine Anlage mit acht Förderlinien näher erläutert.

Die geförderte fluide Phase verteilt sich über einen Verteiler 8 auf beispielsweise acht parallel verlaufende Förderlinien. In jeder Förderlinie sind Strömungswiderstände 1.1 bis 1.8 schematisch dargestellt.

In der o. g. bevorzugten, speziellen Ausführungsvariante der Erfindung gemäß Fig. 2a befinden sich die Ventile 7.1 bis 7.8, die Teildruckmesser 3.1 bis 3.8 und die Meßkapillaren 2.1 bis 2.8 vor dem jeweiligen Strömungswiderstand 1.1 bis 1.8 und ausgangsseitig des Verteilers 8. Die Meßkapillaren 2.1 bis 2.8 liegen hierbei eingangsseitig auf gleichem Gesamtdruckniveau, welches vom Gesamtdruckmesser 10 vor der Verteilung 8 gemessen wird.

In Fig. 2b sind die Ventile 7.1 bis 7.8 eingangsseitig und die Teildruckmesser 3.1 bis 3.8 sowie die Meßkapillaren 2.1 bis 2.8 ausgangsseitig der Strömungswiderstände 1.1 bis 1.8 angeordnet. Die Meßkapillaren liegen hierbei ausgangsseitig auf gleichem Druckniveau (z. B. atmosphärischer Druck).

Gemäß Fig. 2c ist die komplette Anordnung der Teildruckmesser 3.1 bis 3.8, der Meßkapillaren 2.1 bis 2.8 und der Ventile 7.1 bis 7.8 auch ausgangsseitig der Strömungswiderstände 1.1 bis 1.8 möglich. Dabei liegen die Meßkapillaren ausgangsseitig auf gleichem Druckniveau (z.B. atmosphärischer Druck).

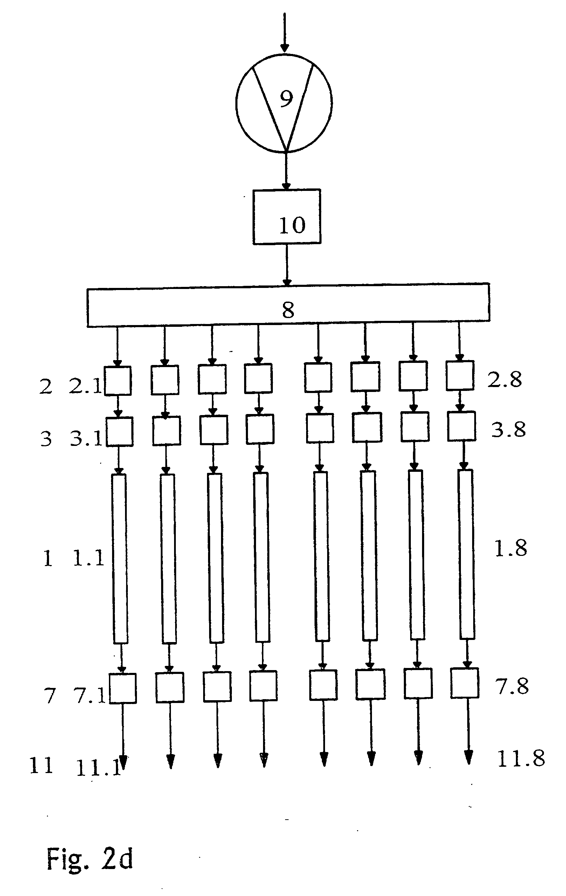

In einer weiteren Variante, dargestellt in Fig. 2d, ist in Umkehrung der Anordnung gemäß Fig. 2b erfindungsgemäß die Möglichkeit gegeben, die Teildruckmesser 3.1 bis 3.8 und die Meßkapillaren 2.1 bis 2.8 eingangsseitig und die Ventile 7.1 bis 7.8 ausgangsseitig der Strömungswiderstände 1.1 bis 1.8 anzuordnen. Die Meßkapillaren liegen hierbei eingangsseitig auf gleichem Gesamtdruckniveau, welches vom Gesamtdruckmesser 10 vor der Verteilung gemessen wird.

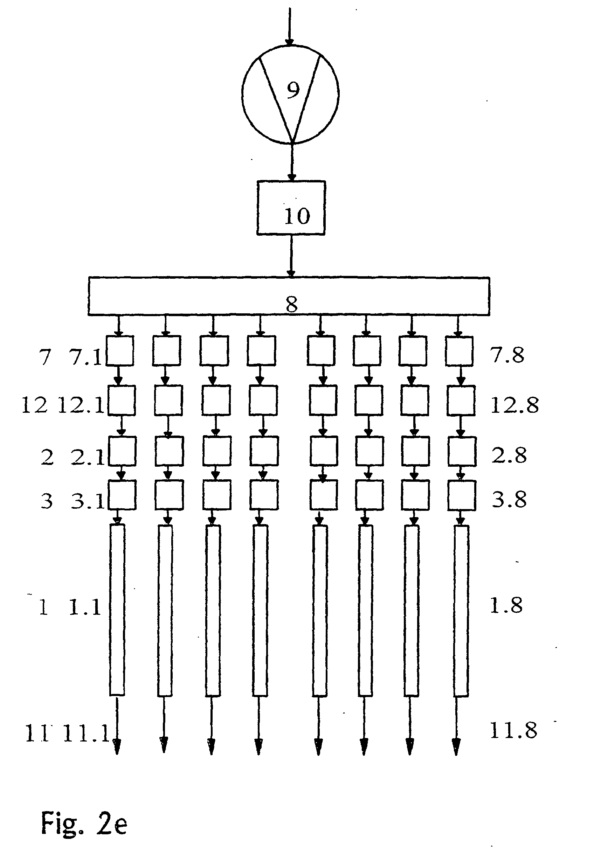

Gemäß Fig. 2e sind die Ventile 7.1 bis 7.8 und die Meßkapillaren 2.1 bis 2.8 eingangsseitig der Strömungswiderstände 1.1 bis 1.8 angeordnet. Der Druckabfall an den Meßkapillaren wird jeweils mittels zweier getrennter Teildruckmesser gleichen Typs 12.1 - 12.8 und 3.1 - 3.8 ermittelt.

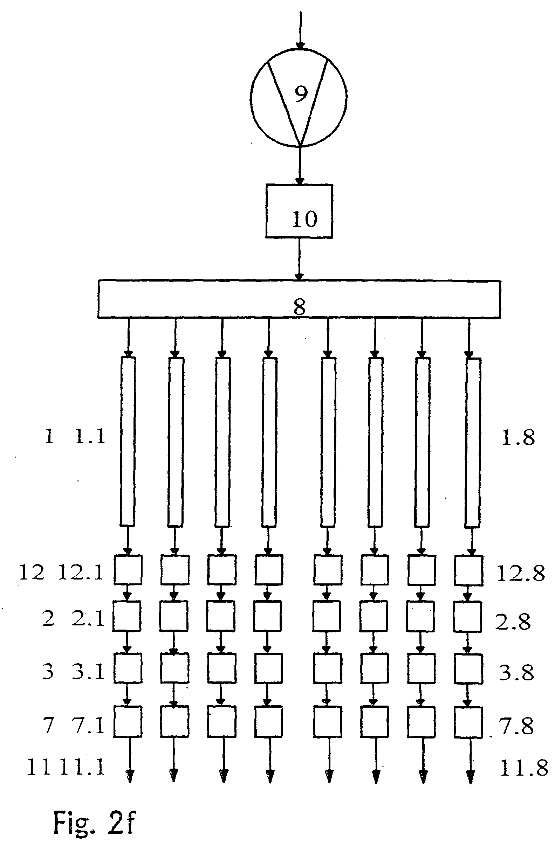

Eine weitere Vertauschung der ausgangsseitig der Strömungswiderstände 1.1 bis 1.8 angeordneten Meßkapillaren 2.1 bis 2.8 und der Ventile 7.1 bis 7.8 in Fig. 2f ist gegenüber der Darstellung der Fig. 2c möglich. Der Druckabfall an den Meßkapillaren (Differenzdruck) wird jeweils mittels zweier getrennter Teildruckmesser gleichen Typs 12.1 - 12.8 und 3.1 - 3.8 ermittelt.

Die in Fig. 2a, Fig. 2d und Fig. 2e dargestellten Ausführungen der erfindungsgemäßen Vorrichtung sind insbesondere für den Betrieb mit einer sich ändernden Viskosität des fluiden Mediums geeignet, da die Meßorte von Gesamtdruck und Teildruck räumlich nah beieinander liegen.

Diese Möglichkeit der flexiblen Anordnung der Regelungsvorrichtung in einem Fördersystem bringt viele Vorteile hinsichtlich des konstruktiven Aufbaues für verschiedene Anwendungsgebiete.

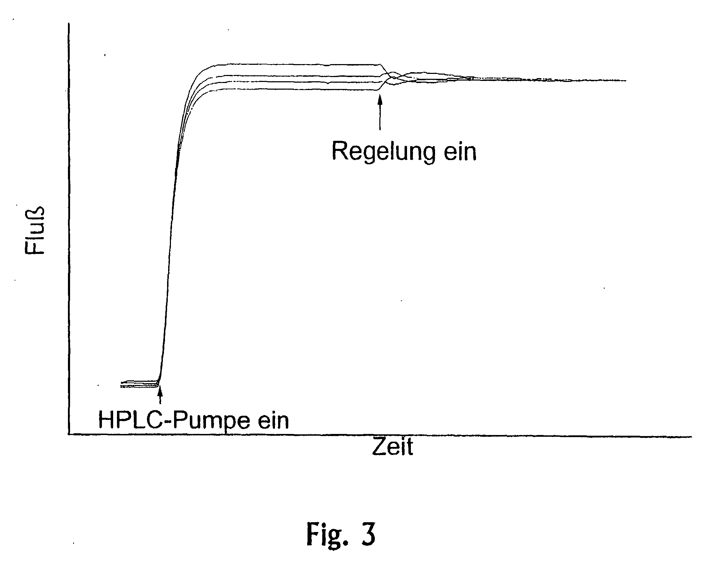

In Fig. 3 sind die Volumenströme von vier parallelen Trennlinien einer Flüssigkeitschromatographie-Anlage dargestellt. Die Kurvenverläufe zeigen die vorteilhafte Wirkung der indirekten Volumenstromregelung gemäß der Erfindung. Die Werte von vier unterschiedlichen Volumenströmen in einzelnen Förderlinien nähern sich mit Einschaltung der Regelung schnell einem gemeinsamen Wert .

Da für viele Anwendungen eine Teilstrombestimmung durch Differenzdruckmessung an einer Messkapillare günstig ist, wird nachfolgend für diese bereits erwähnte spezielle, bevorzugte Ausführung nach Fig. 2a ein Rechenmodell angegeben. Eine Betrachtung der einfachen, physikalischen Gesetzmäßigkeiten verdeutlicht die Zusammenhänge. Eine laminare Flüssigkeitsströmung mit linearem Fließgesetz wird hierbei vorausgesetzt. Zum Verständnis genügt es, nur eine Förderlinie aus n Förderlinien zu beschreiben. Eine Förderlinie bestehe dabei aus einer Anordnung zur Teilstrommessung mittels Messkapillare, einem Ventil zur Regelung sowie einem Hauptströmungswiderstand. Für diesen soll im einfachsten Fall eine Rohrleitung angenommen werden (Für andere Strömungswiderstände gilt entsprechendes). $R_{index()}$ bezeichne die Strömungswiderstände, $\Delta p$ die Druckabfälle, $\eta$ die Viskosität des flüssigen Mediums und $\dot{V}$ den Volumenstrom (Weitere Abkürzungen werden bei den Formeln erklärt).

Für die einzelnen Strömungswiderstände der betrachteten Förderlinie E des in Fig. 2a gezeigten Fördersystems ergeben sich die Ausdrücke

$$R_{Messkapillare(2.1)} = \frac{\Delta p_{Messkapillare}}{\dot{V}_{Teil}} = \frac{8 \cdot \eta \cdot l}{\pi \cdot r^4} \; ;$$

l:Kapillarlänge, r:Innenradius Kapillare

$$R_{Ventil(7.1)} = \frac{\Delta p_{Ventil}}{\dot{V}_{Teil}} = \frac{6 \cdot \eta}{\pi \cdot s^3} \cdot G \; ;$$

s:Spaltweite, G:Geometriefäktor(abhängig vom Ventiltyp)

$$R_{Rohrleitung(1.1)} = \frac{\Delta p_{Rohrleitung}}{\dot{V}_{Teil}} = \frac{8 \cdot \eta \cdot L}{\pi \cdot r^4} \; ;$$

L:Rohrleitungslänge, R: Innenradius der Rohrleitung

Mit dem sich einstellenden Gesamtdruck vor der Verteilung

$$P = \Delta p_{Messkapillare} + \Delta p_{Ventil} + \Delta p_{Rohrleitung}$$

kann man für den gesamten Strömungswiderstand $R_{ges}$ der betrachteten Förderlinie schreiben

$$R_{ges} = \frac{P}{\dot{V}_{Teil}} = \frac{8 \cdot \eta \cdot l}{\pi \cdot r^4} + \frac{6 \cdot \eta}{\pi \cdot s^3} \cdot G + \frac{8 \cdot \eta \cdot L}{\pi \cdot R^4}$$

Da

$$\dot{V}_{Teil} = \frac{\pi \cdot r^4}{8 \cdot \eta \cdot l} \cdot \Delta p_{Messkapillare} = \frac{\pi \cdot r^4}{8 \cdot \eta \cdot l} \cdot \left( P - P_{Messkapillare} \right)$$

ist, kann für den totalen Strömungswiderstand der Förderlinie geschrieben werden

$$R_{ges} = \left( \frac{8 \cdot \eta \cdot l}{\pi \cdot r^4} \right) \cdot \frac{\dot{P}}{P - P_{Messkapillare}} = R_{Messkapillare} + R_{Ventil} + R_{Rohrleitung}$$

Ist die Temperatur überall in der Anlage dieselbe, so läßt sich aus allen Gliedern die Viskosität ($\eta = f(T) = $konst.) eliminieren und es entsteht die Beziehung

EP 1 133 718 B1

$$\frac{P}{P - P_{Messkapillare}} = \frac{\pi \cdot r^4}{8 \cdot l} \cdot \left( \frac{8 \cdot l}{\pi \cdot r^4} + \frac{6 \cdot G}{\pi \cdot s^3} + \frac{8 \cdot L}{\pi \cdot R^4} \right)$$

wodurch das messbare Druckverhältnis $P/(P\text{-}P_{Messkapillare})$ einem nur aus geometrischen Größen bestehenden Ausdruck gleich wird. Der in Klammern stehende Term für das Ventil erlaubt beim Regelvorgang über die Spaltweite s für jede der n Förderlinien die Angleichung aller Teilströmungswiderstände (Gleichheit der Teilströme) bzw. die Einstellung vorgegebener Abweichungen hiervon.

Die nach der Einregulierung der Strömungswiderstände vorhandenen Teilströme sind umgekehrt proportional zum jeweiligen Strömungswiderstand der Förderlinie.

Bei der in Fig. 3 gezeigten, nach Fig. 2b realisierten, indirekten Volumenstromeinregulierung in einer Flüssigkeitschromatographie-Anlage wird die beschriebene Erfindung eingesetzt. Als Hauptströmungswiderstand der Förderlinien ist hierbei die Trennsäule, die mit sphärischen Partikeln gefüllt ist, anzusehen. Der Strömungswiderstand einer Trennsäule läßt sich wie folgt beschreiben:

$$R_{Trennsäule} = \frac{\Delta p_{Trennsäule}}{\dot{V}_{Teil}} = \frac{\chi \cdot \eta \cdot H}{d_k^2 \cdot D^2},$$

$\chi$: dimensionsl. Konst. H:Säulenh. D:Säulend. $d_k$:Partikeld.

Für die einzuregelnden Strömungswiderstandswerte $R_{ges}$ in einer Förderlinie kann nach Eliminierung der Viskosität der folgende Zusammenhang formuliert werden:

$$\frac{P}{P - P_{Messkapillare}} = \frac{\pi \cdot r^4}{8 \cdot l} \cdot \left( \frac{8 \cdot l}{\pi \cdot r^4} + \frac{6 \cdot G}{\pi \cdot s^3} + \frac{\chi \cdot H}{d_k^2 \cdot D^2} \right)$$

Das messbare Druckverhältnis $P/(P\text{-}P_{Messkapillare})$ wird auch hier einem Ausdruck aus geometrischen Größen gleich. Die Auswahl der Ventile erfolgt in diesem Fäll so, daß beim Einregelungsprozeß eine Angleichung des Strömungswiderstandes $R_{ges}$ erreicht werden kann.

**Bezugszeichenliste**

1       Teilströmungswiderstand
1.1 - 1.8
2       Meßkapillare
2.1 - 2.8
3       Teildruckmesser
3.1 - 3.8
4       Istwertermittlung
5       Sollwertabgabeteil
6       Regler
7       Ventil
7.1 - 7.8
8       Verteilung
9       Fördereinheit
10      Gesamtdruckmesser
11      Förderlinie
11.1 - 11.8
12      Teildruckmesser
12.1 - 12.8
13      Konstantflußregler (integriert in 9)

A       Vergleichsstelle (Istwert-Sollwert)

B Drosselstelle

C Datenerfassungs-, Verarbeitungs- und Stellwertausgabemodul

D Teilstrommesseinheit

E Förderlinie in spezieller, bevorzugter Anordnung

**Patentansprüche**

1. Verfahren zur Regelung eines Fördersystems für fluide Medien mit mehreren parallel geführten Förderlinien (11) bei Vorgabe eines konstant geförderten Gesamtstromes, wobei die Förderlinien (11). aus einer einzigen Fördereinheit (9) gespeist werden,
**dadurch gekennzeichnet, daß**
der konstant geförderte Gesamtstrom durch eine Regelung der Teilströmungswiderstände (1), die als Quotient aus Gesamtdruckwert und Teilstromwert fortlaufend ermittelt werden, in den jeweiligen Förderlinien (11) in vorgegebene Teilströme aufgeteilt wird, indem die ermittelten Quotienten als Istwerte mit einem vorgegebenen Sollwert für jede Förderlinie (11) verglichen und in Abhängigkeit von der Größe der jeweiligen Regeldifferenz zwischen Ist-und Sollwert eine Regulierung des jeweiligen Teilströmungswiderstandes (1) und damit des Teilstromes des fluiden Mediums in der jeweiligen Förderlinie erfolgt.

2. Verfahren nach Anspruch 1,
**dadurch gekennzeichnet, daß**
der Gesamtstrom in genau gleiche Teilströme aufgeteilt wird.

3. Verfahren nach Anspruch 1 oder 2,
**dadurch gekennzeichnet, daß**
eingangsseitig ein Gesamtdruckwert des Fördersystems sowie Teilstromwerte direkt in den Förderlinien (11) gemessen werden.

4. Verfahren nach Anspruch 1 oder 2,
**dadurch gekennzeichnet, daß**
eingangsseitig der Gesamtdruckwert des Fördersystems sowie Teilstromwerte indirekt in den Förderlinien (11) gemessen werden.

5. Verfahren nach einem der Ansprüche 1 bis 4,
**dadurch gekennzeichnet, daß**
der Sollwert durch das Verhältnis eines Produktes aus Gesamtdruck und Anzahl der Förderlinien (11) zum Gesamtstrom ermittelt wird.

6. Verfahren nach einem der Ansprüche 1 bis 5,
**dadurch gekennzeichnet, daß**
im Falle unterschiedlicher Teilstromvorgaben der gemäß Anspruch 4 ermittelte Sollwert entsprechend der Teilstromvorgabe mit einem Faktor multipliziert wird.

7. Vorrichtung zur Regelung einzelner Teilströme eines Fördersystems für fluide Medien bei Vorgabe eines konstant geförderten Gesamtstromes mit mehreren, parallel geführten Förderlinien und einer einzigen Fördereinheit (9),
**dadurch gekennzeichnet, daß**
mindestens ein Gesamtdruckmesser (10), ein Verteiler (8), in jeder Förderlinie (11.1 bis 11.8) mindestens eine Teilstrommesseinheit (D) und mindestens ein Ventil (7) mit Drosselstelle (B) sowie ein Datenerfassungs-, Verarbeitungs- und Stellwertausgabemodul (C) angeordnet sind, die über Hardware und/oder Software funktionell miteinander verbunden und zur Bildung von Quotienten aus Gesamtdruckwert und Teilstromwerten als Istwerten, zu deren Vergleich mit vorgegebenen Sollwerten und zur Ausgabe von sich aus diesen Vergleichen ergebenden Regelwerten geeignet sind.

8. Vorrichtung nach Anspruch 7,
**dadurch gekennzeichnet, daß**

die Teilstrommesseinheit (D)
eine Messkapillare (2) und einen Teildruckmesser (3) aufweist.

**9.** Vorrichtung nach Anspruch 7,
**dadurch gekennzeichnet, daß**
die Teilstrommesseinheit (D)
eine Messkapillare (2) und zwei Teildruckmesser (3, 12) aufweist.

**10.** Vorrichtung nach Anspruch 7,
**dadurch gekennzeichnet, daß**
die Teilstrommesseinheit (D)
eine Messkapillare (2) mit einem Differenzdruckmesser aufweist.

**11.** Vorrichtung nach der Anspruch 7,
**dadurch gekennzeichnet, daß**
die Teilstrommesseinheit (D)
ein Durchflußmeßgerät aufweist.

**12.** Vorrichtung nach einem der Ansprüche 7 bis 11,
**dadurch gekennzeichnet, daß**
das Datenerfassungs-, Verarbeitungs- und Stellwertausgabemodul (C) eine Istwertermittlung (4), ein Sollwertabgabeteil (5), eine Vergleichsstelle (A) sowie einen Regler (6) mit proportionalem und/oder integralem und/oder differeritialem Regelverhalten aufweist.

**13.** Vorrichtung nach einem der Ansprüche 7 bis 12,
**dadurch gekennzeichnet, daß**
der Gesamtdruckmesser (10) ausgangsseitig einer Fördereinheit (9) angeordnet ist.

**14.** Vorrichtung nach einem der Ansprüche 7 bis 13,
**dadurch gekennzeichnet, daß**
die Strömungswiderstände (1) ausgangsseitig des Verteilers (8) angeordnet sind.

**15.** Vorrichtung nach einem der Ansprüche 7 bis 14,
**dadurch gekennzeichnet, daß**
die Drosselstelle (B) des Ventils (7) und die Teilstrommesseinheit (D) in einer Förderlinie zwischen dem Gesamtdruckmesser (10) und seriell zu dem Strömungswiderstand (1) angeordnet sind.

**16.** Vorrichtung nach einem der Ansprüche 7 bis 15,
**dadurch gekennzeichnet, daß**
das Ventil (7) mit Drosselstelle (B) und die Teilstrommesseinheit (D) in einer Förderlinie ausgangsseitig des Strömungswiderstandes (1) angeordnet sind.

**17.** Vorrichtung nach einem der Ansprüche 7 bis 15,
**dadurch gekennzeichnet, daß**
das Ventil (7) mit Drosselstelle (B) und die Teilstrommesseinheit (D) eingangsseitig des Strömungswiderstandes (1) angeordnet sind.

**18.** Vorrichtung nach einem der Ansprüche 7 bis 15,
**dadurch gekennzeichnet, daß**
das Ventil (7) mit Drosselstelle (B) ausgangsseitig und die Teilstrommesseinheit (D) eingangsseitig des Strömungswiderstandes (1) angeordnet sind.

**19.** Vorrichtung nach einem der Ansprüche 7 bis 15,
**dadurch gekennzeichnet, daß**
die Teilstrommesseinheit (D) ausgangsseitig und das Ventil (7) mit Drosselstelle (B) eingangsseitig des Strömungswiderstandes (1) angeordnet sind.

**EP 1 133 718 B1**

**Claims**

1. A method for regulating a conveying system for fluid media with several parallel conveying lines (11) with the proviso of a constant total, conveyed flow, wherein the conveying lines (11) are supplied by a single conveying unit (9), the constant total flow conveyed being divided in the respective conveying lines (11) into specified sub-flows by regulating the sub-flow resistances (1), which are determined continuously as the ratio of the total pressure value to the sub-flow value.

2. The method of claim 1, wherein the conveying lines (11) are supplied from a single conveying unit (9), the constant total flow conveyed being divided in the respective conveying lines into exactly equal sub-flows by regulating the sub-flow resistances (1), which are determined continuously as the ratio of the total pressure value to the sub-flow value.

3. The method of claims 1 or 2, wherein a total pressure value of the conveying system as well as sub-flow values directly in the conveying lines (11) are measured at the inlet side, from which values ratios are determined continuously as actual values, these actual values are compared with a specified value for each conveying line (11) and subsequently, depending upon the magnitude of the respective difference between the actual value and the specified value, the sub-flow resistance (1) and, with that, the sub-flow of the fluid medium in the respective conveying lines are regulated.

4. The method of claims 1 or 2, wherein a total pressure value of the conveying system at the inlet side, as well as sub-flow values are measured directly in the conveying lines (11), from which ratios are determined continuously as actual values, these actual values are compared with a specified value for each conveying line (11) and, subsequently, as a function of the magnitude of the respective control difference between the actual value and the specified value, a regulation of the respective sub-flow resistance (1) and, with that, of the sub-flow of the fluid medium in the respective conveying line takes place.

5. The method of one of the claims 1 to 4, wherein the specified value is determined by the ratio of a product of the total pressure and the number of conveying lines (11) to the total flow.

6. The method of one of the claims 1 to 5, wherein, in the event that different sub-flows are specified, the specified value, determined according to claim 4, is multiplied by a factor corresponding to the specified sub-flow.

7. An apparatus for regulating individual sub-flows of a conveying system for fluid media with specification of a total flow, constantly conveyed, with several parallel conveying lines, wherein a single conveying unit (9), at least one total pressure measuring device (10), a distributor (8), at least one sub-flow measuring unit (D) and at least one valve (7) with a throttling site (B), as well as a data acquisition, processing and specified value output module (C), are disposed in each conveying line (11.1 to 11.8) and connected over hardware and/or software functionally with one another.

8. The apparatus of claim 7, wherein the sub-flow measuring unit (D) has a measurement capillary (2) and a partial pressure measuring device (3).

9. The apparatus of claim 7, wherein the sub-flow measuring unit (D) has a measurement capillary (2) and two partial pressure measuring devices (3, 12).

10. The apparatus of claim 7, wherein the sub-flow measuring unit (D) has a measurement capillary (2) with a pressure difference measuring device.

11. The apparatus of claim 7, wherein the sub-flow measuring unit (D) has a flow meter.

12. The apparatus of claims 7 to 11, wherein the data acquisition, processing and set value output module (C) have an actual value determination (4), a specified value delivery part (5), a comparison site (A) as well as a controller (6) with proportional and/or integral and/or differential control behavior.

13. The apparatus of one of the claims 7 to 12, wherein the total pressure measuring device (10) is disposed at the output side of a conveying unit (9).

**14.** The apparatus of one of the claims 7 to 13, wherein the flow resistances (1) are disposed at the output side of the distributor (8).

**15.** The apparatus of one of the claims 7 to 14, wherein the throttling site (B) of the value (7) and the sub-flow measuring unit (D) are disposed in a conveying line between the total pressure meter (10) and serially to the flow resistance (1).

**16.** The apparatus of one of the claims 7 to 15, wherein the valve (7) with the throttling site (B) and the sub-flow measuring unit (D) are disposed in a conveying line on the outlet side of the flow resistance (1).

**17.** The apparatus of one of the claims 7 to 15, wherein the valve (7) with the throttling site (B) and the sub-flow measuring unit (D) are disposed on the inlet side of the flow resistance (1).

**18.** The apparatus of one of the claims 7 to 15, wherein the valve (7) with the throttling site (B) is disposed on the outlet side and the sub-flow measuring unit (D) is disposed on the inlet side of the flow resistance (1).

**19.** The apparatus of one of the claims 7 to 15, wherein the sub-flow measuring unit (D) is disposed on the outlet side and the valve (7) with the throttling site (B) on the inlet side of the flow resistance (1).

**Revendications**

**1.** Procédé de réglage d'un système de transport pour agents fluidiques, comprenant plusieurs conduites de transport (11) parallèles avec une condition préalable d'un courant total transporté de manière constante, les conduites de transport (11) étant alimentées à partir d'une unité de transport unique (9),
**caractérisé en ce que**
le courant total transporté de manière constante est divisé en courants partiels prédéfinis dans les conduites de transport respectives (11) par une régulation des résistances d'écoulements partiels (1), qui sont déterminées en continu sous la forme de quotient de la valeur de la pression totale et de la valeur du courant partiel, en comparant les quotients déterminés sous forme de valeurs réelles à une valeur de consigne prédéfinie pour chaque conduite de transport (11) et, en fonction de la valeur de la différence de régulation respective entre la valeur réelle et la valeur de consigne, en effectuant une régulation de la résistance d'écoulement partiel respective (1) et donc du courant partiel de l'agent fluidique dans la conduite de transport respective.

**2.** Procédé selon la revendication 1,
**caractérisé en ce que**
le courant total est divisé en courants partiels absolument identiques.

**3.** Procédé selon la revendication 1 ou 2,
**caractérisé en ce que**
du côté de l'entrée, une valeur de pression totale du système de transport ainsi que des valeurs de courants partiels sont mesurées directement dans les conduites de transport (11).

**4.** Procédé selon la revendication 1 ou 2,
**caractérisé en ce que**
du côté de l'entrée, la valeur de pression totale du système de transport ainsi que des valeurs de courants partiels sont mesurées indirectement dans les conduites de transport (11).

**5.** Procédé selon l'une quelconque des revendications 1 à 4,
**caractérisé en ce que**
la valeur de consigne est déterminée par le rapport d'un produit de la pression totale et du nombre des conduites de transport (11) sur le courant total.

**6.** Procédé selon l'une quelconque des revendications 1 à 5,
**caractérisé en ce que**
dans le cas de différentes données préalables des courants partiels, la valeur de consigne déterminée selon la revendication 4 est multipliée par un facteur en fonction de la donnée préalable des courants partiels.

**7.** Dispositif de régulation de courants partiels individuels d'un système de transport pour agents fluidiques avec une condition préalable d'un courant total transporté de manière constante avec plusieurs conduites de transport guidées en parallèle et une unité de transport unique (9),
**caractérisé en ce que**
au moins un dispositif de mesure de la pression totale (10), un distributeur (8), dans chaque conduite de transport (11.1 à 11.8) au moins une unité de mesure des courants partiels (D) et au moins une soupape (7) avec un étranglement (B) ainsi qu'un module d'enregistrement des données, de traitement et de restitution de valeurs de réglages (C) sont prévus, lesquels sont connectés fonctionnellement les uns aux autres par le biais de matériel et/ou de logiciels, et sont appropriés à la formation de quotients de la valeur de pression totale et des valeurs des courants partiels en tant que valeurs réelles, en vue de leur comparaison avec des valeurs de consigne prédéfinies, et à la restitution de valeurs de régulation résultant de ces comparaisons.

8. Dispositif selon la revendication 7,
**caractérisé en ce que**
l'unité de mesure des courants partiels (D) présente un capillaire de mesure (2) et un dispositif de mesure de pression partielle (3).

9. Dispositif selon la revendication 7,
**caractérisé en ce que**
l'unité de mesure des courants partiels (D) présente un capillaire de mesure (2) et deux dispositifs de mesure de pression partielle (3, 12).

10. Dispositif selon la revendication 7, **caractérisé en ce que** l'unité de mesure des courants partiels (D) présente un capillaire de mesure (2) avec un dispositif de mesure de la pression différentielle.

11. Dispositif selon la revendication 7,
**caractérisé en ce que**
l'unité de mesure des courants partiels (D) présente un débitmètre.

12. Dispositif selon l'une quelconque des revendications 7 à 11,
**caractérisé en ce que**
le module d'enregistrement des données, de traitement et de restitution de valeurs de réglage (C) présente une détection de la valeur réelle (4), une partie d'émission de la valeur de consigne (5), une zone de comparaison (A) ainsi qu'un régulateur (6) avec un comportement de régulation proportionnel et/ou intégral et/ou différentiel.

13. Dispositif selon l'une quelconque des revendications 7 à 12,
**caractérisé en ce que**
le dispositif de mesure de la pression totale (10) est disposé du côté de la sortie d'une unité de transport (9).

14. Dispositif selon l'une quelconque des revendications 7 à 13,
**caractérisé en ce que**
les résistances d'écoulement (1) sont disposées du côté de la sortie du distributeur (8).

15. Dispositif selon l'une quelconque des revendications 7 à 14,
**caractérisé en ce que**
l'étranglement (B) de la soupape (7) et l'unité de mesure des courants partiels (D) sont disposés dans une conduite de transport entre le dispositif de mesure de la pression totale (10) et en série par rapport à la résistance d'écoulement (1).

16. Dispositif selon l'une quelconque des revendications 7 à 15,
**caractérisé en ce que**
la soupape (7) avec l'étranglement (B) et l'unité de mesure des courants partiels (D) sont disposées dans une conduite de transport du côté de la sortie de la résistance d'écoulement (1).

17. Dispositif selon l'une quelconque des revendications 7 à 15,
**caractérisé en ce que**
la soupape (7) avec l'étranglement (B) et l'unité de mesure des courants partiels (D) sont disposées du côté de l'entrée de la résistance d'écoulement (1).

**18.** Dispositif selon l'une quelconque des revendications 7 à 15,
**caractérisé en ce que**
la soupape (7) avec l'étranglement (B) est disposée du côté de la sortie de la résistance d'écoulement (1) et l'unité de mesure des courants partiels (D) est disposée du côté de l'entrée de la résistance d'écoulement (1).

**19.** Dispositif selon l'une quelconque des revendications 7 à 15,
**caractérisé en ce que**
l'unité de mesure des courants partiels (D) est disposée du côté de la sortie de la résistance d'écoulement (1) et la soupape (7) avec l'étranglement (B) est disposée du côté de l'entrée de la résistance d'écoulement (1).

**Fig. 1a**

Fig. 1b

Fig. 1c

Fig. 1d

Fig. 2a

Fig. 2b

Fig. 2c

Fig. 2d

Fig. 2e

Fig. 2f

EP 1 133 718 B1

**Fig. 3**